# EUROPEAN PATENT APPLICATION

(11) **EP 4 321 038 A1**
(43) Date of publication of application: **14.02.2024**
(21) Application number: 22804654.6
(22) Date of filing: 16.05.2022
(51) Int. Cl.: A23L 29/269, A23L 5/00

(54) **METHOD FOR MANUFACTURING THREE-DIMENSIONAL SHAPED FOOD**

(30) Priority: 18.05.2021 JP 2021084041
(71) Applicant: Mitsubishi Corporation Life Sciences Limited, Tokyo 100-0006 (JP)
(72) Inventor: KANEHIRA, Keisuke, Tokyo 100-0006 (JP); KISHIE, Naoko, Tokyo 100-0006 (JP); OKAWARA, Hina, Tokyo 100-0006 (JP)
(74) Representative: Hamer, Christopher K.
(86) International application number: PCT/JP2022/020418
(87) International publication number: WO 2022/244743

(57) **Abstract**

According to a method for producing a three-dimensional shaped food, the method comprising a step of turning a curdlan dispersion liquid into a heat irreversible gel, and a step of ejecting and laminating the gel, it is possible to obtain a three-dimensional shaped food that may withstand precise shaping with good handling properties at the time of ejection but with high shape retention during and after lamination and also has heat resistance after forming.

## Description

### Technical Field

The present invention relates to a method for producing a three-dimensional shaped food using a curdlan dispersion liquid.

### Background Art

A three-dimensional shaping device (3D printer) for producing a shaped object based on three-dimensional design data is known, and a technology for three-dimensionally shaping foods using this device has been developed (Non-patent Document 1). For example, a method for producing a three-dimensionally formed food is known in which a powdered food material to be formed is bound with a binding liquid for forming (Patent Document 1).

### Prior Art Documents

### Patent Documents

Patent Document 1: Japanese unexamined Patent Application Publication No. 2016-131507

### Non-patent Documents

Non-patent Document 1: *"*Shokuhin to Kaihatsu (Food Processing and Ingredients)," Vol. 55, No. 11, pp. 10-13

### Summary of the Invention

### Object to be Solved by the Invention

In the case of three-dimensional shaping of a food by ejection (which can also be referred to as "discharge") of a raw material, the raw material composition is required to have a viscosity that allows ejection from a nozzle and to have shape retention that allows lamination after ejection. When a cool-coagulable gelling agent, an oil, or the like that is used to impart shape retention, it is necessary to cool a laminated body after ejection and to increase the viscosity of a raw material, and there have been problems such as a decrease in handling properties at the time of ejection due to an increase in viscosity and a decrease in flowability, a decrease in shape retention due to a decrease in cooling efficiency of the laminated body, and a decrease in texture of the laminated body due to an increase in the content of a thickening agent.

Therefore, an object of the present invention is to provide a method for producing a three-dimensional shaped food, wherein a three-dimensional shaped food can be obtained that may withstand precise shaping with good handling properties at the time of ejection but with high shape retention during and after lamination and also has heat resistance after forming.

### Means to Solve the Object

As a result of intensive studies to solve the object above, the present inventors have found that a three-dimensional shaped food, which may withstand precise shaping with good handling properties at the time of ejection but with high shape retention during and after lamination and also has heat resistance after forming, can be obtained by incorporating curdlan, a heat-coagulable polysaccharide, into a raw material of a food; and turning the raw material into a heat-irreversible gel in advance, for example, in a raw material storage container before the stage of ejecting the raw material, or ejecting the raw material at a temperature at which the raw material becomes a heat-irreversible gel when ejected. The present invention has been thus completed.

In other words, the present invention is as specified by the following:
(1) A method for producing a three-dimensional shaped food, comprising a step of turning a curdlan dispersion liquid into a heat irreversible gel, and a step of ejecting and laminating the gel.
(2) The method for producing a three-dimensional shaped food according to (1) above, wherein the heat irreversible gel is formed by adjusting the curdlan dispersion liquid to 55 to 85°C in a raw material storage container.
(3) The method for producing a three-dimensional shaped food according to (1) above, wherein the heat irreversible gel is formed by adjusting the curdlan dispersion liquid to 55 to 85°C at the time of ejection.
(4) The method for producing a three-dimensional shaped food according to any one of (1) to (3) above, wherein the curdlan dispersion liquid contains 2 to 8 parts by mass of curdlan per 100 parts by mass of water in the curdlan dispersion liquid.
(5) The method for producing a three-dimensional shaped food according to any one of (1) to (4) above, wherein the gelled curdlan dispersion liquid has a viscosity of 1,000 to 10,000 mPa · s.
(6) The method for producing a three-dimensional shaped food according to any one of (1) to (5) above, wherein the gelled curdlan dispersion liquid has a stress of 500 to 20,000 N/m² and an adhesion of 100 to 2,000 J/m³.
(7) The method for producing a three-dimensional shaped food according to any one of (1) to (6) above, wherein the curdlan dispersion liquid is ejected from a nozzle having an aperture of 2 mm or less.
(8) The method for producing a three-dimensional shaped food according to any one of (1) to (7) above, wherein a three-dimensional shaping device is used.
(9) A three-dimensional shaped food produced by the method according to any one of (1) to (8) above.
(10) A curdlan dispersion liquid for use in the method according to any one of (1) to (8) above.
(11) Use of a curdlan dispersion liquid in the method for producing a three-dimensional shaped food according to any one of (1) to (8) above.

### Effect of the Invention

In the present invention, a dispersion of curdlan in water (curdlan dispersion liquid) is used as a raw material for a three-dimensional shaped food. The three-dimensional shaped food with high shape retention during and after lamination and heat resistance even after forming while having good handling properties at the time of ejection can be obtained by turning the curdlan dispersion liquid into a heat-irreversible gel in advance before ejection, for example, in the raw material storage container or in a transfer path from the raw material storage container to an ejection part; or ejecting the curdlan dispersion liquid at a temperature at which a heat-irreversible gel is formed. Each layer forming this three-dimensional shaped food has sufficient strength at each moment of lamination. Therefore, it can be expected to enable precise shaping and to clarify a boundary between layers when raw materials with different compositions (e.g., coloring agents) are laminated.

### Mode of Carrying Out the Invention

The three-dimensional shaped food in the present invention is a food shaped three-dimensionally by using a composition in which curdlan is dispersed in water (curdlan dispersion liquid) as a raw material and ejecting and laminating the composition, and can be produced, for example, by using a three-dimensional shaping device (3D printer) that shapes the product based on three-dimensional data.

The raw material of the food used in the present invention is a curdlan dispersion liquid. The curdlan dispersion liquid contains water and curdlan as essential components. As described later, the curdlan dispersion liquid may contain components other than water and curdlan as long as they do not interfere with the production of the three-dimensional shaped food, while it does not have to contain components other than water and curdlan as essential components. Here, the water may be food-derived water (moisture) contained in a food paste or the like.

The curdlan used in the present invention is a heat-coagulable polysaccharide mainly composed of β-1,3-glycosidic bonds, which is produced from microorganisms. A substance having such a structure is referred to as a β-1,3-glucan, and examples thereof include paramylon and pachyman in addition to curdlan. Examples of the curdlan include a polysaccharide produced from a microorganism of the genus *Alcaligenes* or *Agrobacterium.* The curdlan is commercially available and can be easily obtained.

In the present invention, the curdlan content in the curdlan dispersion liquid is, for example, 1.2 parts by mass or more, 1.5 parts by mass or more, 2 parts by mass or more, 2.5 parts by mass or more, 3 parts by mass or more, 4 parts by mass or more, 5 parts by mass or more, 10 parts by mass or less, 9 parts by mass or less, 8 parts by mass or less, 7 parts by mass or less, 6 parts by mass or less, and 5 parts by mass or less, per 100 parts by mass of water in the curdlan dispersion liquid. The content is preferably 2 to 8 parts by mass and more preferably 3 to 6 parts by mass.

The raw material is prepared as a curdlan dispersion liquid by mixing and stirring water, curdlan, and other components that may be used, if necessary, which are necessary components for food raw materials. As described above, the step of preparing the curdlan dispersion liquid can be provided before the step of turning the curdlan dispersion liquid into a heat irreversible gel, which will be described later.

The curdlan dispersion liquid is only required to be prepared before heating, and the method of preparing a curdlan dispersion liquid is not limited, but for example, a plurality of curdlan dispersion liquid with different compositions may be prepared and mixed before heating to adjust the composition of components. For example, a dispersion liquid in which only curdlan is dispersed (i.e., a dispersion liquid containing only curdlan as a dispersoid) and a dispersion liquid or a solution containing components other than curdlan as dispersoids or solutes may be prepared, which may be mixed before heating. By doing so, it is possible to prepare a dispersion liquid having diverse compositions from a small number of different dispersion liquid. When being prepared, the dispersion liquid may be intentionally made in a heterogeneous state as long as it does not affect formability or shape retention. The curdlan dispersion liquid may also contain solids as long as they do not affect ejection, lamination, and shaping. The solids to be contained are not particularly limited as long as they can be used as foods. In addition to non-heat-coagulated curdlan, the curdlan dispersion liquid may further contain particles obtained by crushing previously heat-coagulated curdlan gel.

Example of the step of turning the curdlan dispersion liquid into a heat irreversible gel includes a step of turning the curdlan dispersion liquid into a heat irreversible gel by heating the curdlan dispersion liquid. Specific examples thereof include storing the curdlan dispersion liquid in a container (raw material storage container), followed by heating the container to gel the curdlan dispersion liquid. Here, the raw material storage container is not particularly limited as long as it can store the curdlan dispersion liquid and withstand the temperature at which the curdlan dispersion liquid is heated, but when a three-dimensional shaping device is used, preferred is a raw material storage container that can be set up on s raw material filling part of the three-dimensional shaping device.

The step of turning the curdlan dispersion liquid into a heat irreversible gel is preferably performed at 55 to 85°C, more preferably at 60 to 80°C, from the viewpoints of viscosity of the gelled curdlan dispersion liquid, adhesion during forming a laminated body, and shape retention of the laminated body. In this case, the curdlan dispersion liquid forms a heat irreversible gel, and the laminated body produced using this gel retains the shape of the laminated body even when cooled to 55°C or lower and reheated. As described above, the curdlan dispersion liquid is gelled in advance before ejection and then ejected, but when the raw material storage container itself is not heated, gelation may be performed at the time of ejection by keeping the temperature between the raw material storage container and the ejection part, specifically, a transfer part connecting the raw material storage container and the ejection part or the ejection part, preferably the ejection part, at 55 to 85°C, more preferably 60 to 80°C. By doing so, an appropriate degree of fluidity can be ensured at the time of ejection of the curdlan dispersion liquid from the viewpoint of handling properties.

The gelled curdlan dispersion liquid has a viscosity of, for example, 1,000 mPa·s or more, 2,000 mPa·s or more, 3,000 mPa·s or more, 3,100 mPa·s or more, 4,000 mPa·s or more, 10,000 mPa·s or less, 9,000 mPa·s or less, 8,000 mPa·s or less, and 7,000 mPa·s or less from the viewpoint of handling properties at the time of ejection and shape retention of the laminated body formed by ejection, but the viscosity is preferably 1,000 to 10,000 mPa·s and more preferably 2,000 to 9,000 mPa·s. The viscosity here is measured with a cone plate viscometer (HAAKE Rheo Stress 6000, manufactured by Thermo Fisher Scientific) at a shear rate of 50 s⁻¹. In addition, the gelled curdlan dispersion liquid has a stress (hardness) of, for example, 500 N/m² or more, 1,000 N/m² or more, 1,200 N/m² or more, 2,000 N/m² or more, 3,000 N/m² or more, 5,000 N/m² or more, 20,000 N/m² or less, 18,000 N/m² or less, 17,000 N/m² or less, 15,000 N/m² or less, 10,000 N/m² or less from the viewpoint of handling properties at the time of ejection and shape retention of the laminated body formed by ejection, and an adhesion of, for example, 100 J/m³ or more, 300 J/m³ or more, 400 J/m³ or more, 500 J/m³ or more, 800 J/m³ or more, 1,000 J/m³ or more, 2,000 J/m³ or less, 1,900 J/m³ or less, 1,800 J/m³ or less, 1,700 J/m³ or less, 1,600 J/m³ or less, and 1,500 J/m³ or less. The stress (hardness) is preferably 500 to 2,0000 N/m², and more preferably 1,000 to 18,000 N/m², while the adhesion is preferably 100 to 2,000 J/m³, and more preferably 300 to 1,800 J/m³. The stress (hardness) and adhesion here are stress (hardness) and adhesion measured by a physical property tester for food (CREEP Meter RE2-3305B, manufactured by YAMADEN co., ltd.) with a plunger having a diameter of 20 mm (thickness: 8 mm) under the conditions of a compression rate of 10 mm/sec and a compression amount of 10 mm (compression ratio: 66.67%) on a test piece having a diameter of 40 mm and a height of 15 mm.

The precise shaping in the present invention, in the case of a circular ejection port, involves ejection from a nozzle having an aperture (inner dimension) of 2 mm or less, lamination and shaping, and by adopting the constitution of the present invention, the shape is well maintained, the boundary between the layers is always clear, and a precise structure can be accurately shaped. When the ejection port is not circular, for example, in the case of an elliptical ejection port, the short axis (inner dimension) is 2 mm or less; in the case of a square ejection port, the short side (inner dimension) is 2 mm or less; or even in a case where the ejection port has another shape, precise shaping is possible if the narrowest inner dimension portion is 2 mm or less. In one aspect, the aperture of 2 mm or less in the present invention means that the narrowest inner dimension portion of the ejection port is 2 mm or less. The cross-sectional area of a hollow portion of the ejection port is preferably 10 mm² or less, more preferably 8 mm² or less, and even more preferably 4 mm² or less. In other words, the cross-sectional area of the ejected gel is preferably 10 mm² or less, more preferably 8 mm² or less, and even more preferably 4 mm² or less. Note that the aperture of the ejection port is, for example, 0.2 mm or more. In addition, the cross-sectional area of the hollow portion of the ejection port is 0.03 mm² or more, that is, the cross-sectional area of the ejected gel is 0.03 mm² or more.

As described above, the raw material (curdlan dispersion liquid) used in the food of the present invention may or may not contain components other than water and curdlan, if necessary, as long as they do not interfere with the production of the three-dimensional shaped food. Examples of major components other than water and curdlan include a food paste, a processed starch, and a thickening polysaccharide. A seasoning and a coloring agent can also be used for the purpose of seasoning and coloring, respectively.

A food paste is a paste-like food made of vegetables, fruits, seafood, meat, eggs, dairy products, or processed products thereof, which are raw or heated and then micronized by a conventionally known method such as crushing, grinding, or straining so that there are no large lumps. The food paste also includes a paste-like food whose water content is adjusted by an operation such as drying if necessary, and a completely dried food which is made into a powder form. A non-uniform paste can also be used as long as it does not interfere with the production by clogging the nozzle at the time of ejection or interfering with shaping.

Processed starch is a general term for substances that have been modified by physical, chemical, or enzymatic treatment of natural starch to improve their properties. The processed starch is used to impart the desired viscoelastic properties to the food, and any commercially available starch can be used to the extent that it does not interfere with shaping.

Thickening polysaccharide is a general term for watersoluble polymeric compounds with a structure formed by polymerization of sugars having viscous and gelling properties when dissolved in water. The thickening polysaccharide is used to impart viscosity to foods, and any commercially available product can be used to the extent that it does not interfere with shaping. In addition, protein-derived material such as egg white can also be used to impart viscosity to foods to the extent that it does not interfere with shaping.

In the present invention, the method of ejection and lamination is not particularly limited but may be performed using a device such as a three-dimensional shaping device (3D printer) as described above or by hand. The ejection may be performed, for example, by a nozzle of the three-dimensional shaping device, a syringe, a needle, or a tip. The lamination may be in any direction, such as bottom-to-top (vertical) lamination, lateral lamination, oblique lamination, and a combination thereof. The number, thickness, surface area, volume, and shape of the layers to be laminated may be appropriately set for each food to be produced, which are not particularly limited.

The three-dimensional shaped food produced by ejecting and laminating the gelled curdlan dispersion liquid can be used as it is, but since the gel strength increases by further heating at a temperature higher than the processing temperature, food having a higher strength than the gel before ejection can be obtained.

Since the gel strength of the three-dimensional shaped food obtained by the present invention can be adjusted by a blending ratio of curdlan, it is possible to adjust the gel strength of foods ranging from a soft food such as a nursing food to an elastic food such as squid sashimi. The shape of the three-dimensional shaped food is not limited as long as it can be formed by lamination. Furthermore, it is also possible to produce a three-dimensional shaped food with a more complex composition by preparing a plurality of food raw materials with different contents and ejecting each of them from a separate nozzle. The three-dimensional shaped food of the present invention may also be laminated by including a layer other than the gelled curdlan dispersion liquid.

### Examples

The present invention will be described in detail with reference to Examples below, but the present invention is not limited to the following Examples.

### Example 1

Commercially available curdlan was mixed with a commercially available carrot paste (solid content: 10% by mass) at a predetermined concentration to make a curdlan dispersion liquid, which was kept at a predetermined processing temperature for 30 minutes for gelation, then squeezed out in five rows 5 cm long from a syringe with a circular ejection port having an aperture diameter of 2 mm, and five layers thereof were laminated in a vertical direction. After 30 minutes elapsed, the appearance was evaluated. The evaluation was as follows: 0 for a gel being liquid-like and unable to be laminated, 1 for a gel difficult to laminate and having no shape retention, 2 for a gel able to be laminated but low in shape retention, and 3 for a gel easy to laminate and high in shape retention. The results are shown in Table 1.

**[Table 1]**

| Processing Temperature (°C) | Parts by mass of curdlan (per 100 parts by mass of water) | | | |
|---|---|---|---|---|
| | 0.53 | 1.05 | 3.16 | 5.26 |
| 60 | 0 | 2 | 3 | 3 |
| 70 | 1 | 2 | 3 | 3 |
| 80 | 1 | 2 | 3 | 3 |

### (Measurement of Viscosity)

Commercially available curdlan was mixed with a commercially available carrot paste (solid content: 10% by mass) at a predetermined concentration to obtain a curdlan dispersion liquid, and the viscosity was measured with a cone plate viscometer (HAAKE Rheo Stress 6000, manufactured by Thermo Fisher Scientific) at a shear rate of 50 s⁻¹. The results are shown in Table 2.

**[Table 2]**

| Viscosity: mPa·s | | | | |
|---|---|---|---|---|
| Processing Temperature (°C) | Parts by mass of curdlan (per 100 parts by mass of water) | | | |
| | 0.53 | 1.05 | 3.16 | 5.26 |
| 60 | 550 | 1130 | 3130 | 7760 |
| 70 | 878 | 1320 | 2720 | 6950 |
| 80 | 1260 | 3060 | 2330 | 8330 |

### (Measurement of Viscoelasticity)

Commercially available curdlan and a commercially available carrot paste (solid content 10% by mass) were mixed at a predetermined concentration to obtain a curdlan dispersion liquid, and the viscoelasticity was measured by a physical property tester for food (CREEP Meter RE2-3305B, manufactured by YAMADEN co., ltd.) with a plunger having a diameter of 20 mm (thickness: 8 mm) under the conditions of a compression rate of 10 mm/sec and a compression depth of 10 mm (compression ratio: 66.67%) on the hardness (stress) and adhesion of a test piece having a diameter of 40 mm and a height of 15 mm. The results are shown in Tables 3 and 4.

**[Table 3]**

| Hardness (stress): N/m² | | | | |
|---|---|---|---|---|
| Processing Temperature (°C) | Parts by mass of curdlan (per 100 parts by mass of water) | | | |
| | 0.53 | 1.05 | 3.16 | 5.26 |
| 60 | 398 | 286 | 1241 | 3119 |
| 70 | 493 | 493 | 1289 | 3454 |
| 80 | 493 | 875 | 7974 | 16775 |

**[Table 4]**

| Adhesion: J/m³ | | | | |
|---|---|---|---|---|
| Processing Temperature (°C) | Parts by mass of curdlan (per 100 parts by mass of water) | | | |
| | 0.53 | 1.05 | 3.16 | 5.26 |
| 60 | 77 | 60 | 410 | 1164 |
| 70 | 114 | 139 | 403 | 1105 |
| 80 | 124 | 230 | 1140 | 1660 |

### Example 2

First, 2.0 parts by mass of curdlan, 40.0 parts by mass of spinach paste (including 3.4 parts by mass of solids), 4.0 parts by mass of hydroxypropyl distarch phosphate derived from tapioca, 1.0 parts by mass of dextrin, 53.0 parts by mass of water were stirred with a mixer until homogeneous, and then the mixture was poured to fill a raw material storage container made of resin. The raw material storage container was set up on a raw material filling part kept warm at 80°C of a three-dimensional shaping device, and raw materials gelled in advance were ejected and laminated for forming to produce a three-dimensional shaped food with a precise bitter melon appearance. The gel had good handling properties at the time of ejection and high shape retention during and after the lamination. In addition, the surface of the bitter melon-like, three-dimensional shaped food had an irregular surface that precisely reproduced the surface of a real bitter melon.

### Comparative Example 1

A bitter melon-like, three-dimensional shaped food was produced under the same conditions as in Example 2, except that the raw material filling part of the three-dimensional shaping device was kept at a warming temperature of 45°C. Since gelation of the raw material was insufficient at 45°C, the resulting three-dimensional shaped food could not maintain a bitter melon-like shape, and the surface also had a shape in which irregularities were squashed.

### Industrial Applicability

The present invention can be effectively used in the field of producing a three-dimensional shaped food, particularly in the field of producing a three-dimensional shaped food using a three-dimensional shaping device (3D printer).

## Claims

1. A method for producing a three-dimensional shaped food, comprising a step of turning a curdlan dispersion liquid into a heat irreversible gel, and a step of ejecting and laminating the gel.

2. The method for producing a three-dimensional shaped food according to claim 1, wherein the heat irreversible gel is formed by adjusting the curdlan dispersion liquid to 55 to 85°C in a raw material storage container.

3. The method for producing a three-dimensional shaped food according to claim 1, wherein the heat irreversible gel is formed by adjusting the curdlan dispersion liquid to 55 to 85°C at the time of ejection.

4. The method for producing a three-dimensional shaped food according to any one of claims 1 to 3, wherein the curdlan dispersion liquid contains 2 to 8 parts by mass of curdlan per 100 parts by mass of water in the curdlan dispersion liquid.

5. The method for producing a three-dimensional shaped food according to any one of claims 1 to 4, wherein the gelled curdlan dispersion liquid has a viscosity of 1,000 to 10,000 mPa · s.

6. The method for producing a three-dimensional shaped food according to any one of claims 1 to 5, wherein the gelled curdlan dispersion liquid has a stress of 500 to 20,000 N/m² and an adhesion of 100 to 2,000 J/m³.

7. The method for producing a three-dimensional shaped food according to any one of claims 1 to 6, wherein the curdlan dispersion liquid is ejected from a nozzle having an aperture of 2 mm or less.

8. The method for producing a three-dimensional shaped food according to any one of claims 1 to 7, wherein a three-dimensional shaping device is used.

9. A three-dimensional shaped food produced by the method according to any one of claims 1 to 8.

10. A curdlan dispersion liquid for use in the method according to any one of claims 1 to 8.
